# EUROPÄISCHE PATENTANMELDUNG

(11) **EP 3 315 019 A1**
(43) Veröffentlichungstag der Anmeldung: **02.05.2018**
(21) Anmeldenummer: 16195593.5
(22) Anmeldetag: 25.10.2016
(51) Int. Cl.: A01G 1/08

(54) **ECKBLECHFORMTEIL, VERWENDUNG DES ECKBLECHFORMTEILS, VERFAHREN ZUM HERSTELLEN EINES ECKBLECHFORMTEILS UND RASENKANTENSET**

(71) Anmelder: reinkedesign.GmbH, 90763 Fürth (DE)
(72) Erfinder: REINKE, Waldemar, 90768 Fürth (DE)
(74) Vertreter: Dr. Gassner & Partner mbB

(57) **Zusammenfassung**

Die Erfindung betrifft ein Eckblechformteil, die Verwendung des Eckblechformteils als Rasenkante, ein Verfahren zum Herstellen eines Eckblechformteils und ein Rasenkantenset. Das Eckblechformteil ist ein Eckblechformteil mit einem ersten (S1) und einem zweiten Schenkel (S2), wobei das Eckblechformteil einstückig aus einem Blechzuschnitt hergestellt ist, wobei die beiden Schenkel (S1, S2) über einen einen ersten (1) und einen zweiten Abschnitt (2) umfassenden oder aus einem ersten (1) und einem zweiten Abschnitt (2) bestehenden Randbereich des Blechzuschnitts miteinander in Verbindung stehen, wobei der erste Schenkel (S1) den ersten Abschnitt (1) und der zweite Schenkel (S2) den zweiten Abschnitt (2) umfasst und zwischen dem ersten (1) und dem zweiten Abschnitt (2) eine erste Faltkante (F1) angeordnet ist, an welcher der erste Abschnitt (1) abgekantet ist, wobei der erste Abschnitt (1) gegenüber dem zweiten Abschnitt (2) einen ersten Winkel (W1) zwischen 20° und 170° bildet, wobei beide Schenkel (S1, S2) jeweils neben dem Randbereich nebeneinander angeordnete weitere Abschnitte (3, 4, 5, 6, 7) aufweisen, wobei zwischen dem Randbereich und den weiteren Abschnitten (3, 4, 5, 6, 7) und zwischen den weiteren Abschnitten (3, 4, 5, 6, 7) eines jeden der Schenkel (S1, S2) jeweils weitere Faltkanten (F2, F3, F4, F5, F6) angeordnet sind, an denen die weiteren Abschnitte (3, 4, 5, 6, 7) jeweils gegenüber dem benachbarten Randbereich oder benachbarten weiteren Abschnitt (3, 4, 5, 6, 7) abgekantet sind,
wobei an beiden Schenkeln (S1, S2) jeweils in einem der nicht direkt benachbart zum Randbereich angeordneten weiteren Abschnitte mindestens ein Verbindungsmittel (V) vorgesehen ist, welches entsprechend dem Verbindungsmittel (V) am jeweils anderen der Schenkel (S1, S2) so angeordnet und ausgebildet ist, dass die beiden Verbindungsmittel (V) so miteinander verbunden sein können, dass jeder der Schenkel (S1, S2) dadurch gegenüber dem jeweils anderen der Schenkel in einem durch den ersten Winkel (W1) festgelegten weiteren Winkel fixiert ist
oder
wobei zumindest an einem der Schenkel (S1, S2) in einem der weiteren Abschnitte (3, 4, 5, 6, 7), welcher nicht direkt benachbart zum Randbereich angeordnet ist, mindestens ein Verbindungsmittel (V) vorgesehen ist, welches so ausgebildet ist, dass es mit dem jeweils anderen der Schenkel (S1, S2) so verbunden sein kann, dass jeder der Schenkel (S1, S2) dadurch gegenüber dem jeweils anderen der Schenkel in einem durch den ersten Winkel (W1) festgelegten weiteren Winkel fixiert ist.

## Beschreibung

Die Erfindung betrifft ein einstückig aus einem Blechzuschnitt hergestelltes Eckblechformteil mit zwei Schenkeln. Die Erfindung betrifft weiterhin die Verwendung des Eckblechformteils, ein Verfahren zur Herstellung des Eckblechformteils und ein Rasenkantenset.

Blechformteile zur Verwendung als Rasenkanten sind aus dem deutschen Gebrauchsmuster DE 20 2012 011 118 bekannt. Die Rasenkanten weisen jeweils im oberen Bereich eine Biegekante auf und bestehen jeweils aus einem langen Blechstreifen mit einer wellenförmiger Versteifung der Unterkante. Zum Ausbilden einer Ecke können zwei dieser Blechstreifen in einem Winkel zueinander in das Erdreich gesteckt werden. Eine solche Ecke weist nur eine geringe Stabilität auf und es ist schwierig eine solche Ecke in einem genau vorgegebenen Winkel bereitzustellen.

Die US 4,269,255 offenbart die Herstellung von Eckblechformteilen. Die Formteile sind zunächst aus einem Blechzuschnitt geformt, weisen aber zusätzliche Klammern und Nieten auf, um die Eckblechformteile zu stabilisieren. Zusätzliche Klammern und Nieten machen die Herstellung eines solchen Eckblechformteils teuer und kompliziert.

Es besteht Bedarf an Eckblechformteilen mit einem vorgegebenen Eckwinkel, welche einfach herstellbar und gleichzeitig verhältnismäßig verwindungssteif sind.

Die Aufgabe der vorliegenden Erfindung ist es, ein Eckblechformteil, welches einfach und kostengünstig herstellbar ist und dabei eine hohe Verwindungssteifigkeit und Stabilität aufweist, eine Verwendung eines solchen Eckblechformteils, ein Verfahren zur Herstellung des Eckblechformteils und ein das Eckblechformteil enthaltendes Set anzugeben.

Die Aufgabe der Erfindung wird durch die Merkmale der Patentansprüche 1, 10, 11 und 15 gelöst. Ausgestaltungen ergeben sich aus den Merkmalen der Patentansprüche 2 bis 9 und 12 bis 14.

Die Erfindung betrifft ein Eckblechformteil mit einem ersten und einem zweiten Schenkel, wobei das Eckblechformteil einstückig aus einem Blechzuschnitt hergestellt ist. Die beiden Schenkel stehen über einen einen ersten und einen zweiten Abschnitt umfassenden oder einen aus einem ersten und einem zweiten Abschnitt bestehenden Randbereich des Blechzuschnitts miteinander in Verbindung, wobei der erste Schenkel den ersten Abschnitt und der zweite Schenkel den zweiten Abschnitt umfasst. Zwischen dem ersten und dem zweiten Abschnitt ist eine erste Faltkante angeordnet, an welcher der erste Abschnitt abgekantet ist, wobei der erste Abschnitt gegenüber dem zweiten Abschnitt einen ersten Winkel zwischen 20° und 170° bildet. Beide Schenkel weisen jeweils neben dem Randbereich nebeneinander angeordnete weitere Abschnitte auf. Zwischen dem Randbereich und den weiteren Abschnitten und zwischen den weiteren Abschnitten eines jeden der Schenkel sind jeweils weitere Faltkanten angeordnet, an denen die weiteren Abschnitte jeweils gegenüber dem benachbarten Randbereich oder benachbarten weiteren Abschnitt abgekantet sind. An beiden Schenkeln ist jeweils in einem der nicht direkt benachbart zum Randbereich angeordneten weiteren Abschnitte mindestens ein Verbindungsmittel vorgesehen, welches entsprechend dem Verbindungsmittel am jeweils anderen der Schenkel so angeordnet und ausgebildet ist, dass die beiden Verbindungsmittel so miteinander verbunden sein können, dass jeder der Schenkel dadurch gegenüber dem jeweils anderen Schenkel in einem durch den ersten Winkel festgelegten weiteren Winkel fixiert ist. Bei einer Ausgestaltung sind die beiden Verbindungsmittel miteinander verbunden.

Alternativ kann zumindest an einem der Schenkel in einem der weiteren Abschnitte, welcher nicht direkt benachbart zum Randbereich angeordnet ist, mindestens ein Verbindungsmittel vorgesehen sein, welches so ausgebildet ist, dass es mit dem jeweils anderen der Schenkel so verbunden sein kann, dass jeder der Schenkel dadurch gegenüber dem jeweils anderen der Schenkel in einem durch den ersten Winkel festgelegten weiteren Winkel fixiert ist. Bei einer Ausgestaltung ist das Verbindungsmittel mit dem jeweils anderen der Schenkel verbunden. Bei diesem Verbindungsmittel kann es sich beispielsweise um eine aus dem nicht direkt benachbart zum Randbereich angeordneten weiteren Abschnitt gebildete Klemmverbindung handeln, in welcher ein nicht direkt benachbart zum Randbereich angeordneter weiterer Abschnitt im anderen der Schenkel festgeklemmt werden kann.

Das Verbindungsmittel kann insbesondere einen Durchbruch, eine Lasche, eine Zunge und ähnliches umfassen oder daraus bestehen. Es kann durch Schneiden oder Stanzen und gegebenenfalls Biegen aus dem Blechzuschnitt hergestellt werden und eine Verbindung zwischen den beiden Schenkeln bilden, um die beiden Schenkel in dem weiteren Winkel zu fixieren. Eine Zunge zeichnet sich dabei ebenso wie eine Lasche durch eine fixierte Seite und eine gegenüberliegende flexible Seite aus. Das Verbindungsmittel kann auch ein Rastmittel zur Sicherung der durch das Verbindungsmittel gebildeten Verbindung umfassen. Bei dem Rastmittel kann es sich beispielsweise um eine Ausstülpung der Lasche zum Einrasten in eine entsprechende Vertiefung oder einen entsprechenden weiteren Durchbruch handeln.

Das Verbindungsmittel kann aus dem Blechzuschnitt gebildet sein, beispielsweise indem aus dem Blechzuschnitt eine Lasche zum Eingreifen in einen Durchbruch gebildet ist oder indem der Blechzuschnitt einen Durchbruch zur Aufnahme einer Lasche aufweist. Die Lasche und der Durchbruch können dabei jeweils als Verbindungsmittel oder als Teil eines zusammenwirkenden Verbindungsmittels aufgefasst werden. Das Verbindungsmittel kann aber auch ein beliebiges anderes Verbindungsmittel, wie beispielsweise eine Schraube oder eine Niete oder sogar eine Schweißverbindung umfassen oder daraus bestehen. Einer der Schenkel kann zur Aufnahme eines solchen Verbindungsmittels einen Durchbruch aufweisen. Bei einer Schraube oder Niete als Verbindungsmittel kann dann der jeweils andere Schenkel zur Verbindung mittels des Verbindungsmittels einen zum Durchbruch des einen der Schenkel korrespondierenden weiteren Durchbruch aufweisen, so dass das Verbindungsmittel durch beide Durchbrüche hindurch zur Verbindung eingesetzt werden kann.

Bei einer Schweißverbindung als Verbindungsmittel kann nur einer der Schenkel einen Durchbruch aufweisen. Bei einer Überlappung mit dem jeweils anderen der Schenkel kann dann durch den Durchbruch hindurch ein den anderen der Schenkel mit dem Schenkel verbindender Schweißpunkt auf den anderen der Schenkel gesetzt werden.

Hier und im Folgenden kann es sich bei einem Abschnitt um einen Bereich des Eckblechformteils handeln, der an zumindest eine Faltkante oder eine der genannten Faltkanten grenzt.

Der erste Winkel kann zwischen 45° und 135°, insbesondere zwischen 85° und 95°, betragen. Insbesondere kann der erste Winkel 90° betragen. Der erste und der weitere Winkel können übereinstimmen. Dies ist insbesondere dann der Fall, wenn die Abschnitte und die weiteren Abschnitte jeweils im rechten Winkel abgekantet sind.

Der erste und der zweite Abschnitt können direkt benachbart angeordnet und über die erste Faltkante miteinander verbunden sein. Alternativ kann zwischen dem ersten und dem zweiten Abschnitt mindestens ein weiterer Abschnitt angeordnet sein.

In einer Ausführungsform umfassen die weiteren Abschnitte einen dritten, vierten, fünften, sechsten und siebten Abschnitt,

wobei der erste Schenkel nebeneinander angeordnet den ersten, dritten und fünften Abschnitt umfasst und der zweite Schenkel nebeneinander angeordnet den zweiten, vierten, sechsten und siebten Abschnitt umfasst,
wobei die weiteren Faltkanten eine zweite, dritte, vierte, fünfte und sechste Faltkante umfassen.

Vom ersten Abschnitt erstreckt sich der dritte Abschnitt, wobei die zweite Faltkante senkrecht zur ersten Faltkante verläuft und zwischen dem ersten und dem dritten Abschnitt angeordnet ist, wobei der dritte Abschnitt eine trapezförmige Fläche mit einem spitzen zweiten Winkel und einem gegenüberliegenden stumpfen dritten Winkel an einer ersten Innenkante des dritten Abschnitts bildet, wobei die sich zwischen dem spitzen zweiten Winkel und dem stumpfen dritten Winkel erstreckende erste Innenkante am spitzen zweiten Winkel an ein Ende der ersten Faltkante grenzt.

Vom zweiten Abschnitt erstreckt sich der vierte Abschnitt, wobei die dritte Faltkante senkrecht zur ersten Faltkante verläuft und zwischen dem zweiten und dem vierten Abschnitt angeordnet ist, wobei der vierte Abschnitt eine trapezförmige Fläche mit einem spitzen vierten Winkel und einem gegenüberliegenden stumpfen fünften Winkel an einer zweiten Innenkante des vierten Abschnitts bildet, wobei die sich zwischen dem spitzen vierten Winkel und dem stumpfen fünften Winkel erstreckende zweite Innenkante am spitzen vierten Winkel an das Ende der ersten Faltkante grenzt,
wobei die erste Innenkante und die zweite Innenkante im gefalteten Zustand des Blechzuschnitts parallel verlaufen und aneinandergrenzen.

Vom dritten Abschnitt erstreckt sich der fünfte Abschnitt, wobei die vierte Faltkante zwischen dem dritten Abschnitt und dem fünften Abschnitt angeordnet ist, wobei die zweite und die vierte Faltkante parallel verlaufen, wobei eine Fläche des fünften Abschnitts einen sechsten und einen siebten Winkel aufweist, zwischen denen sich eine dritte Innenkante erstreckt.

Vom vierten Abschnitt erstreckt sich der sechste Abschnitt, wobei die fünfte Faltkante zwischen dem vierten Abschnitt und dem sechsten Abschnitt angeordnet ist, wobei die dritte und die fünfte Faltkante parallel verlaufen, wobei eine Fläche des sechsten Abschnitts einen achten und einen neunten Winkel aufweist, zwischen denen sich die sechste Faltkante erstreckt.

An oder entlang der sechsten Faltkante erstreckt sich der siebte Abschnitt, wobei die sechste Faltkante zwischen dem sechsten Abschnitt und dem siebten Abschnitt angeordnet ist, und der siebte Abschnitt und der fünfte Abschnitt im gefalteten Zustand des Blechzuschnitts zumindest teilweise überlappen,
wobei die dritte Innenkante und die sechste Faltkante im gefalteten Zustand des Blechzuschnitts parallel verlaufen und optional aneinandergrenzen,
wobei die Verbindungsmittel im fünften und siebten Abschnitt angeordnet sind.

Beim Aneinandergrenzen der genannten oder anderer Kanten können diese aneinanderstoßen. Es kann aber auch ein geringer Abstand von bis zu 5 mm, insbesondere bis zum 4 mm, insbesondere bis zu 3 mm, insbesondere bis zu 2 mm, insbesondere bis zu 1 mm, zwischen den aneinandergrenzenden Kanten vorhanden sein. Der Blechzuschnitt für die vorgenannte Ausführungsform lässt sich einfach aus einem Blech ausschneiden oder ausstanzen. Der zweite Winkel und der dritte Winkel sowie der vierte und der fünfte Winkel sind bei dieser Ausführungsform jeweils in Summe 180° groß. Durch Wählen des spitzen zweiten Winkels und des spitzen vierten Winkels, die insbesondere gleich groß sind, wird der erste Winkel bestimmt. 180° abzüglich der Summe des zweiten und des vierten Winkels ergibt den ersten Winkel, wenn der dritte und vierte Abschnitt gegenüber dem Randbereich um 90° abgekantet sind. Die zweite, dritte, vierte und fünfte Faltkante können insbesondere einen Kantenwinkel von 60° bis 120°, insbesondere einen Kantenwinkel von 90°, aufweisen, wobei unter einem Kantenwinkel der Winkel zwischen den Flächen verstanden wird, die angrenzend an die Faltkante angeordnet sind.

Bei einer Ausgestaltung weist der fünfte Abschnitt im Bereich der dritten Innenkante als Verbindungsmittel zumindest einen ersten Durchbruch zum Einstecken einer ersten Lasche in den fünften Abschnitt durch den ersten Durchbruch hindurch auf. Der siebte Abschnitt weist dabei die aus dem siebten Abschnitt, insbesondere durch Schneiden oder Stanzen, gebildete und zu dem ersten Durchbruch korrespondierende erste Lasche auf.

Ein Durchbruch und eine Lasche lassen sich mit wenigen Schnitten oder durch Stanzen aus einem Blech herstellen. Eine solche Lasche kann zusätzlich ein Rastmittel z. B. in Form einer Kerbe oder Ausstülpung aufweisen. Grundsätzlich können auch ein Durchbruch auf dem siebten Abschnitt und eine Lasche auf dem fünften Abschnitt angeordnet sein.

Die Verbindungsmittel sind "korrespondierend" wenn sie jeweils an einer zur Anordnung des jeweils anderen Verbindungsmittels für ein Zusammenwirken passenden Stelle angeordnet sind und von den Abmessungen her so aneinander angepasst sind, dass sie Zusammenwirken können. Insbesondere kann die Lasche dazu so ausgestaltet sein, dass sie durch den korrespondieren Durchbruch hindurch in den den Durchbruch aufweisenden Abschnitt oder eine den Durchbruch aufweisende Zunge einsteckbar ist.

Unter dem Bereich einer Kante wird insbesondere der Teil eines jeweiligen Abschnitts verstanden, in welchem jeder Punkt einen minimalen Abstand zur jeweiligen Kante aufweist, welcher maximal 30%, insbesondere maximal 25%, insbesondere maximal 20%, insbesondere maximal 15%, insbesondere maximal 10%, insbesondere maximal 5%, des kürzesten Abstands zwischen der Kante und der der Kante gegenüberliegenden weiteren Kante des jeweiligen Abschnitts beträgt. Bei der Kante und der weiteren Kante kann es sich um Außenkanten des Abschnitts oder/und die Außenkante und die Innenkante des Abschnitts handeln.

In einer weiteren Ausführungsform ist die erste Lasche so ausgebildet, dass der fünfte Abschnitt von dem siebten Abschnitt durch eine von der ersten Lasche ausgeübte Federkraft oder durch ein Umbiegen der ersten Lasche gehalten oder fixiert wird bzw. werden kann.

Bei einer weiteren Ausgestaltung weist der dritte Abschnitt eine der ersten Innenkante gegenüberliegende erste Außenkante, der vierte Abschnitt eine der zweiten Innenkante gegenüberliegende zweite Außenkante, der fünfte Abschnitt eine der dritten Innenkante gegenüberliegende dritte Außenkante und der sechste Abschnitt eine der sechsten Faltkante gegenüberliegende vierte Außenkante auf, wobei jeweils im Bereich von zumindest einer oder zwei der ersten, zweiten, dritten und vierten Außenkante zumindest ein Befestigungsmittel zum Befestigen weiterer Blechformteile ausgebildet oder angeordnet ist,
wobei das Befestigungsmittel optional mindestens ein Befestigungsmittel oder eine Kombination von Befestigungsmitteln aus der folgenden Gruppe ist:
i) eine im Bereich der ersten, zweiten, dritten und/oder vierten Außenkante angeordnete erste, zweite, dritte und/oder vierte Zunge zum Überlappen mit einem Bereich einer ersten, zweiten, dritten und/oder vierten Außenkante eines weiteren erfindungsgemäßen Eckblechformteils oder zum Überlappen mit einem weiteren Blechformteil,
ii) mindestens ein zweiter Durchbruch, welcher in der dritten und/oder vierten Zunge oder im fünften und/oder sechsten Abschnitt im Bereich der dritten und/oder vierten Außenkante angeordnet ist, zum Einstecken einer zweiten Lasche eines weiteren Eckblechformteils gemäß dem nachfolgenden Merkmal iii) oder einer Lasche eines weiteren Blechformteils und,
iii) mindestens eine zweite Lasche, welche auf der dritten und/oder vierten Zunge oder im fünften und/oder sechsten Abschnitt im Bereich der dritten und/oder vierten Außenkante angeordnet ist, zum Einstecken in den zweiten Durchbruch eines weiteren Eckblechformteils gemäß dem obigen Merkmal ii) oder in einen Durchbruch eines weiteren Blechformteils.

Das Befestigungsmittel kann auch so ausgestaltet sein wie ein beliebiges der oben genannten Verbindungsmittel. Es kann sich dabei also auch um eine Schraube, eine Niete oder eine Schweißverbindung handeln.

Das weitere Blechformteil kann ein weiteres, insbesondere erfindungsgemäßes, Eckblechformteil oder ein, insbesondere keine Ecke bildendes, Blechformteil, beispielsweise in Form einer Rasenkante oder Beetbegrenzung, sein. Jeder der Schenkel des Eckblechformteils und das weitere Blechformteil weisen eine gleiche Querschnittsform auf.

Die Querschnittsform wird z. B. im Falle des ersten Schenkels durch die Kantwinkel der zweiten und vierten Faltkante, die erste und zweite Außenkante sowie eine Außenseite des ersten Abschnitts bestimmt.

Die erste, zweite, dritte und/oder vierte Zunge kann durch einen Doppelfalz um eine Blechstärke so nach innen versetzt sein, dass sie direkt so unter bzw. hinter einen entsprechenden Abschnitt eines weiteren Blechformteils geschoben werden kann, dass das Eckblechformteil und das weitere Blechformteil formschlüssig miteinander verbunden werden können.

Unter "innen" wird im Sinne der Erfindung der Bereich verstanden, welcher sich zwischen einer vom ersten bzw. zweiten Abschnitt aufgespannten Ebene und dem fünften bzw. sechsten Abschnitt des Eckblechformteils befindet.

Unter "außen" im Sinne der Erfindung wird demnach die Seite des fünften bzw. sechsten Abschnitts des Eckblechformteils verstanden, die einer innen liegenden Seite des fünften bzw. sechsten Abschnitts gegenüberliegt.

Durch den zweiten Durchbruch und/oder eine dritte Lasche kann das weitere Blechformteil fest mit dem Eckblechformteil verbunden werden. Die Lasche und/oder die Zunge können zusätzlich Rastmittel, z. B. in Form von Kerben oder Ausstülpungen, aufweisen.

Bei einer Ausgestaltung ist der zweite (W2) und der vierte Winkel (W4) jeweils größer als 35° und kleiner als 55° und der dritte Winkel (W3) beträgt 180° abzüglich dem zweiten Winkel (W2) und der fünfte Winkel (W5) beträgt 180° abzüglich dem vierten Winkel (W4).

Bei einer weiteren Ausgestaltung sind der sechste, der siebte, der achte und der neunte Winkel jeweils rechte Winkel. Insbesondere wenn der sechste und der achte Winkel jeweils ein rechter Winkel sind, können die Kantenwinkel der vierten Faltkante und fünften Faltkante jeweils auch rechte Winkel sein.

Bei einer Ausgestaltung weisen der erste und der zweite Abschnitt, der dritte und der vierte Abschnitt sowie der fünfte und der sechste Abschnitt jeweils eine zueinander spiegelsymmetrische Umfangsform auf. In dieser Ausgestaltung sind beide Schenkel des Eckblechformteils gleich lang.

Bei einer weiteren Ausgestaltung sind im fünften Abschnitt der vierten Faltkante gegenüberliegend eine erste Unterkante und im sechsten Abschnitt der fünften Faltkante gegenüberliegend eine zweite Unterkante angeordnet und der fünfte und/oder der sechste Abschnitt weist zumindest eine fünfte Zunge auf, wobei die fünfte Zunge an einer siebten Faltkante aus dem fünften und/oder sechsten Abschnitt herausgebogen werden kann und im herausgebogenen Zustand gegenüber dem fünfen und/oder sechsten Abschnitt einen, insbesondere rechtwinkligen, Vorsprung bildet, wobei die siebte Faltkante zur vierten oder fünften Faltkante in einem definierten Abstand parallel und beabstandet zur ersten Unterkante und/oder zweiten Unterkante verläuft. Unter der ersten Unterkante kann eine Außenkante des fünften Abschnitts, welche der vierten Faltkante gegenüberliegt, und unter der zweiten Unterkante eine Außenkante des sechsten Abschnitts, welche der fünften Faltkante gegenüberliegt, verstanden werden. Die erste bzw. zweite Unterkante ist im Allgemeinen diejenige Außenkante, welche auf ihrer gesamten Länge am weitesten von der vierten bzw. fünften Faltkante entfernt ist. Üblicherweise ist zwischen der vierten bzw. fünften Faltkante und der ersten bzw. zweiten Unterkante, außer gegebenenfalls der siebten Faltkante, keine dazwischenliegende weitere Faltkante vorhanden. Der Abstand der siebten Faltkante zur vierten bzw. fünften Faltkante kann höchstens 90%, insbesondere höchstens 80%, insbesondere höchstens 70%, insbesondere höchstens 60%, insbesondere höchstens 50%, des Abstands zwischen der vierten bzw. fünften Faltkante und der ersten bzw. zweiten Unterkante betragen. Die siebte Faltkante ist im Allgemeinen näher an der ersten bzw. zweiten Unterkante als an der vierten bzw. fünften Faltkante angeordnet. Die erste bzw. zweite Unterkante und die siebte Faltkante können parallel verlaufen.

Der Vorsprung ist geeignet, bei einem Einstecken des Eckblechformteils in ein Erdreich, den Anteil des sich ins Erdreich erstreckenden fünften und sechsten Abschnitts zu begrenzen. Durch das Vorsehen der fünften Zunge lässt sich in einfacher Weise eine Höhenmarkierung auf dem Eckblechformteil vorsehen. Wenn die fünfte Zunge nach innen oder außen herausgebogen ist, kann das Eckblechformteil z. B. so tief in ein Erdreich oder anderes weiches Medium eingesteckt werden, bis der Vorsprung auf dem Erdreich oder dem anderem Medium aufliegt. Wenn die fünfte Zunge flach auf der Oberfläche des Erdreichs aufliegt, verlaufen auch die vierte und die fünfte Faltkante parallel zur Oberfläche des Erdreichs. Dadurch ist es, insbesondere wenn auch mit dem erfindungsgemäßen Eckblechformteil zu verbindende weitere als Rasenkanten oder Beetbegrenzungen ausgebildete Blechformteile ebenfalls jeweils mindestens eine solche als Vorsprung herausbiegbare Zunge aufweisen, auf einfache Weise möglich, alle Blechformteile und Eckblechformteile so in das Erdreich zu stecken, dass sie jeweils die gleiche Einstecktiefe und/oder gleiche Höhe über dem Erdreich aufweisen. Dadurch wird es erleichtert, die Eckblechformteile und die weiteren Blechformteile so als Rasenkanten oder Beetbegrenzungen in das Erdreich einzusetzen, dass sie direkt aneinander anschließen und sich ein gleichmäßiges Erscheinungsbild ergibt. Zumindest eine der genannten Faltkanten kann eine geringere Blechstärke als der Rest des Blechzuschnitts und/oder eine Perforation aufweisen, so dass das Abkanten bzw. Falten bzw. Herausbiegen der Abschnitte oder der fünften Zunge erleichtert wird.

Das erfindungsgemäße Eckblechformteil ist robust und verbindungssteif.

Das erfindungsgemäße Eckblechformteil kann insbesondere als Rasenkante oder Beetbegrenzung verwendet werden, indem das Eckblechformteil mit dem fünften und sechsten Abschnitt in ein Erdreich gesteckt wird, und mit weiteren Blechformteilen und/oder weiteren, insbesondere erfindungsgemäßen, Eckblechformteilen verbunden wird, wobei der erste und der zweite Schenkel und die damit zu verbindenden weiteren Blechformteile und/oder erste und/oder zweite Schenkel der weiteren Eckblechformteile eine gleiche Querschnittsform aufweisen. Die Querschnittsform des ersten Schenkels kann dabei die Querschnittform in der Mitte zwischen der dritten Außenkante und der dritten Innenkante und die Querschnittsform des zweiten Schenkels die Querschnittform in der Mitte zwischen der vierten Außenkante und der sechsten Außenkante sein, wobei dabei eine gegebenenfalls vorhandene fünfte Zunge und siebte Faltkante außer Acht gelassen wird. Der Querschnitt kann dabei jeweils in einer Ebene geführt werden, die im ersten Schenkel rechtwinklig zum dritten und fünften und im zweiten Schenkel rechtwinklig zum vierten und sechsten Abschnitt verläuft. Die weiteren Blechformteile können ebenfalls jeweils zumindest eine als Vorsprung herausbiegbare Zunge zur Begrenzung der Einstecktiefe in ein Erdreich aufweisen.

Das erfindungsgemäße Eckblechformteil eignet sich z. B. auch als Maßnahme gegen den Befall eines Beetes durch Schnecken. Dazu muss das Eckblechformteil nur so tief in das Erdreich gesteckt werden, dass zwischen dem ersten und zweiten Abschnitt und dem Erdreich ein Luftspalt von einigen Zentimetern besteht, der ausreicht, um nicht von den Schnecken überwunden werden zu können. Schnecken, die versuchen, über den fünften und sechsten Abschnitt das Eckblechformteil zu überwinden, können weder den durch den dritten und vierten Abschnitt gebildeten Abstand zum ersten und zweiten Abschnitt, der typischerweise 1 bis 10 cm beträgt, überwinden, um dann über den ersten und zweiten Abschnitt in das Beet zu gelangen, noch können sie von einer Innenseite des ersten oder zweiten Abschnitts her über eine den ersten und zweiten Abschnitt begrenzende Außenkante auf eine Außenseite des ersten oder zweiten Abschnitts gelangen.

Weiterhin betrifft die Erfindung ein Verfahren zum Herstellen eines Eckblechformteils, welches die folgenden Schritte umfasst:
a) Bereitstellen eines Bleches,
b) Ausschneiden oder Ausstanzen eines vorgegebenen Blechzuschnitts entlang eines Umfangsrands, wobei der Blechzuschnitt einen ersten, zweiten, dritten, vierten, fünften, sechsten und siebten Abschnitt umfasst,
wobei der Umfangsrand durch die Umfangsrandabschnitte gebildet wird,
wobei der erste und der zweite Abschnitt jeweils zwei aneinandergrenzende Umfangsrandabschnitte aufweisen,
wobei der dritte Abschnitt eine erste Innenkante und eine gegenüberliegende erste Außenkante als Umfangsrandabschnitte aufweist,
wobei der vierte Abschnitt eine zweite Innenkante und eine gegenüberliegende zweite Außenkante als Umfangsrandabschnitte aufweist,
wobei der fünfte Abschnitt eine dritte Innenkante, eine gegenüberliegende dritte Außenkante und eine die dritte Innenkante und die dritte Außenkante verbindende erste Unterkante als Umfangsrandabschnitte aufweist,
wobei der siebte Abschnitt, insbesondere mindestens, drei Umfangsrandabschnitte aufweist und
wobei der sechste Abschnitt eine vierte Außenkante und eine daran angrenzende zweite Unterkante als Umfangsrandabschnitte aufweist,
wobei der von der ersten, zweiten, dritten und vierten Außenkante gebildete Umfangsrandabschnitt jeweils optional eine jeweils drei Umfangsrandabschnitte aufweisende erste, zweite, dritte und vierte Zunge umfasst,
wobei der dritte Abschnitt an den ersten und den fünften Abschnitt, der vierte Abschnitt an den zweiten und den sechsten Abschnitt, und der siebte Abschnitt an den sechsten Abschnitt grenzt,
c) Herstellen oder Bereitstellen jeweils mindestens eines Verbindungsmittels im fünften und/oder siebten Abschnitt,
d) Falten des Blechzuschnitts an der ersten, zweiten, dritten, vierten, fünften und sechsten Faltkante durch Abkanten um einen vorgegebenen Kantenwinkel, so dass die erste Innenkante an die zweite Innenkante stößt und der siebte Abschnitt und der fünfte Abschnitt zumindest teilweise überlappen,
e) Verbinden des siebten Abschnitts mit dem fünften Abschnitt mittels des/der Verbindungsmittel(s).

Der siebte Abschnitt kann beispielsweise dann mehr als drei Umfangsrandabschnitte aufweisen, wenn eine der Außenkanten des siebten Abschnitts nicht geradlinig, sondern in einer gezahnten Form verläuft.

Der Blechzuschnitt kann in einem Arbeitsschritt aus einem Blech z. B. mittels eines Laserschneidgeräts ausgeschnitten oder durch eine Blechstanze ausgestanzt werden. Der Blechzuschnitt kann entlang der Faltkanten einseitig oder beidseitig, insbesondere durch einen Materialabtrag oder durch Einkerben, verjüngt werden. Alternativ können Perforationen entlang der Faltkanten in den Blechzuschnitt eingebracht werden. Diese Maßnahmen erleichtern ein manuelles Falten des Blechzuschnitts ohne Hilfsmittel. Der Blechzuschnitt kann entlang aller vorgesehenen Faltkanten gefaltet werden. Durch das Verbinden der Verbindungsmittel wird ein weitgehend verbindungssteifes Eckblechformteil bereitgestellt.

Bei einer Ausgestaltung wird das Verbindungsmittel durch zumindest einen ersten Durchbruch im fünften Abschnitt und eine erste Lasche im siebten Abschnitt gebildet,
wobei im Schritt e) die erste Lasche durch den ersten Durchbruch hindurch in den fünften Abschnitt eingesteckt wird.

Bei einer weiteren Ausgestaltung umfasst das Verfahren mindestens einen der weiteren Schritte
b1) Herstellen einer ersten, zweiten, dritten und/oder vierten Zunge im Bereich der ersten, zweiten, dritten und/oder vierten Außenkante und optional
d1) Herstellen eines Doppelfalzes an der ersten, zweiten, dritten und/oder vierten Zunge an deren jeweiligem Übergang von der ersten, zweiten, dritten und/oder vierten Außenkante, so dass die erste, zweite, dritte und/oder vierte Zunge sich jeweils um eine Blechstärke, insbesondere nach innen, versetzt parallel zum dritten (3), vierten (4), fünften (5) und/oder sechsten Abschnitt (6) erstreckt,
b2) Herstellen zumindest eines zweiten Durchbruchs in zumindest dem fünften Abschnitt, dem sechsten Abschnitt, der dritten Zunge und/oder der vierten Zunge zum Einstecken einer zweiten Lasche eines weiteren erfindungsgemäßen Eckblechformteils oder eines weiteren Blechformteils und
b3) Herstellen zumindest einer zweiten Lasche in zumindest dem fünften Abschnitt, dem sechsten Abschnitt, der dritten Zunge und/oder der vierten Zunge zum Einstecken in einen zweiten Durchbruch in einem weiteren erfindungsgemäßen Eckblechformteil oder einem weiteren Blechformteil.

Unter einer Blechstärke wird die Dicke des bereitgestellten Blechs verstanden.

Erste, zweite, dritte und/oder vierte Zungen sind einstückig aus dem Blechzuschnitt gebildet und mit dem Blechzuschnitt verbunden, so dass im Fall des Schritts b1) der Schnitt bzw. das Stanzen beim Ausschneiden oder Ausstanzen des Blechzuschnitts nicht direkt an der Außenkante des ersten, zweiten, dritten oder vierten Abschnitts sondern an Außenkanten der angrenzenden ersten, zweiten, dritten und/oder vierten Zunge erfolgt. Die Zunge kann, insbesondere mittels eines Doppelfalzes, so gefaltet werden, dass die Erstreckung der Zunge um eine Blechstärke parallel versetzt ist. Bei einer Ausgestaltung wird nur eine dritte und/oder vierte Zunge mit einem Durchbruch oder einer Lasche versehen, so dass die bei bestimmungsgemäßer Verwendung als Rasenkante oder Beeteinfassung nach oben zeigenden dritten und vierten Abschnitte keine Ausschnitte aufweisen. Insbesondere werden zur Verbindung des weiteren Blechformteils zwei bis vier in gleichem Abstand zur Außenkante angeordnete Durchbrüche oder Laschen aus der dritten oder vierten Zunge ausgeschnitten.

In einer weiteren Ausgestaltung umfasst das Verfahren weiterhin den Schritt
b3) Herstellen von zumindest einer fünften Zunge im fünften und/oder sechsten Abschnitt, so dass die fünfte Zunge über eine zur vierten oder fünften Faltkante parallele siebte Faltkante mit dem fünften oder sechsten Abschnitt verbunden ist
und den Schritt
e1) Herausbiegen der dritten Zunge aus dem fünften und/oder sechsten Abschnitt, so dass die dritte Zunge gegenüber dem fünften oder sechsten Abschnitt einen, insbesondere rechtwinkligen, Vorsprung bildet.

Zumindest die siebte Faltkante am Übergang der fünften Zunge zum fünften und/oder sechsten Abschnitt kann durch eine Perforation oder Blechverjüngung markiert werden, so dass das Herausbiegen der fünften Zunge ohne maschinelle Hilfsmittel vorgenommen werden kann.

Weiterhin wird ein Rasenkantenset vorgeschlagen, umfassend zumindest zwei erfindungsgemäße Eckblechformteile und optional weitere Blechformteile, wobei die Schenkel der Eckblechformteile und die weiteren Blechformteile eine gleiche Querschnittsform aufweisen. Die weiteren Blechformteile können ebenfalls fünfte Zungen mit siebten Faltkanten, wie sie für das erfindungsgemäße Eckblechformteil beschrieben wurden, aufweisen.

Die weiteren Blechformteile weisen, insbesondere im Bereich von Außenkanten, Befestigungsmittel auf, welche so angeordnet sind, dass sie mit den Befestigungsmitteln des erfindungsgemäßen Eckblechformteils verbunden werden können. Ein solches Rasenkantenset kann z. B. vier Eckblechformteile mit einem ersten Winkel von 90° umfassen und einer Anzahl von geraden Blechformteilen, so dass aus den Eckblechformteilen und den geraden Blechformteilen ein Rechteck gebildet werden kann. Mit einer entsprechend beliebigen Anzahl von weiteren Blechformteilen kann die Größe des Rechtecks angepasst werden. Ein solches Rasenkantenset umfasst insbesondere Eckblechformteile mit gleichen ersten Winkeln. Das erfindungsgemäße Rasenkantenset kann z. B. auch sechs Eckblechformteile mit einem ersten Winkel von 120° umfassen, die zu einem Sechseck zusammengefügt werden können. Die Größe des Sechsecks kann durch Einfügen der weiteren Blechformteile angepasst werden.

Nachfolgend wird die Erfindung anhand von Figuren erläutert. Es zeigen:
- Fig. 1: ein Blechzuschnitt,
- Fig. 2a: eine perspektivische Ansicht eines Eckblechformteils,
- Fig. 2b: eine perspektivische Ansicht eines weiteren Eckblechformteils,
- Fig. 3: eine perspektivische Ansicht eines weiteren Eckblechformteils,
- Fig. 4: eine perspektivische Ansicht eines weiteren Eckblechformteils,
- Fig. 5: ein Ausschnitt aus der Außenseite eines Schenkels eines weiteren Eckblechformteils mit einer damit zu verbindenden Außenseite eines weiteren Eckblechformteils oder eines weiteren Blechformteils,
- Fig. 6: ein Ausschnitt aus der Außenseite eines Schenkels eines weiteren Eckblechformteils mit einer damit zu verbindenden Außenseite eines weiteren Eckblechformteils oder eines weiteren Blechformteils,
- Fig. 7: ein Ausschnitt aus der Außenseite eines Schenkels eines weiteren Eckblechformteils mit einer damit zu verbindenden Außenseite eines weiteren Eckblechformteils oder eines weiteren Blechformteils,
- Fig. 8: ein erstes Rasenkantenset und
- Fig. 9: ein zweites Rasenkantenset.

Bei sämtlichen der im Folgenden beschriebenen perspektivischen Darstellungen sind zum Betrachter zeigende, abgekantete Faltkanten jeweils als Doppellinie dargestellt.

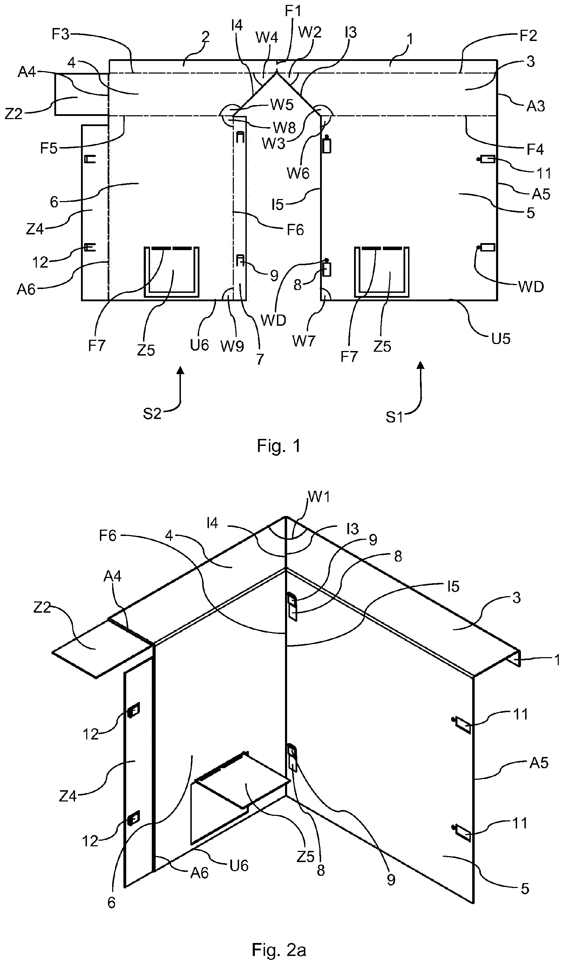

Fig. 1 zeigt einen Blechzuschnitt, der einen ersten Abschnitt 1, einen zweiten Abschnitt 2, einen dritten Abschnitt 3, einen vierten Abschnitt 4, einen fünften Abschnitt 5, einen sechsten Abschnitt 6 und einen siebten Abschnitt 7 umfasst. Der erste Abschnitt 1 und der zweite Abschnitt 2 sind im gezeigten Beispiel nebeneinander angeordnet. Die erste Faltkante F1 befindet sich zwischen dem ersten Abschnitt 1 und dem zweiten Abschnitt 2. Der erste Abschnitt 1 und der zweite Abschnitt 2 können z. B. eine viereckige, insbesondere rechteckige, Fläche aufweisen. An den ersten Abschnitt 1 grenzt der dritte Abschnitt 3 an. Der dritte Abschnitt 3 hat eine Trapezfläche mit dem spitzen Winkel W2, der an die zweite Faltkante F2 und die erste Faltkante F1 grenzt. Der dritte Winkel W3 ist ein stumpfer Winkel. Die zweite Faltkante F2 und die vierte Faltkante F4 bilden die parallelen Seiten der Trapezfläche. Die zwischen dem zweiten Winkel W2 und dem dritten Winkel W3 verlaufende erste Innenkante I3 liegt der ersten Außenkante A3 des dritten Abschnitts 3 gegenüber.

An den dritten Abschnitt 3 grenzt entlang der vierten Faltkante F4 der fünfte Abschnitt 5, der den sechsten Winkel W6 und den siebten Winkel W7 an einer dritten Innenkante I5 des fünften Abschnitts 5 aufweist. Im Bereich der dritten Innenkante I5 ist ein erster Durchbruch 8 angeordnet. Es können auch mehrere Durchbrüche 8 vorgesehen sein. An den Durchbrüchen 8 ist jeweils ein weiterer Durchbruch WD vorgesehen, in welchen ein Rastmittel zur Sicherung einer Verbindung einrasten kann. Im unteren Bereich des fünften Abschnitts 5 ist eine fünfte Zunge Z5 gezeigt, die an der siebten Faltkante F7 eine Perforation aufweist. Die dritte Außenkante des fünften Abschnitts 5 ist mit A5 bezeichnet.

Der zweite Schenkel S2 wird durch den zweiten Abschnitt 2, vierten Abschnitt 4 und sechsten Abschnitt 6, sowie den siebten Abschnitt 7 gebildet. Die dritte Faltkante F3 verläuft zwischen dem zweiten Abschnitt 2 und dem vierten Abschnitt 4. Die fünfte Faltkante F5 verläuft zwischen dem vierten Abschnitt 4 und dem sechsten Abschnitt 6. Die dritte Faltkante F3 und die fünfte Faltkante F5 verlaufen parallel und begrenzen die Trapezfläche des vierten Abschnitts 4. Der vierte Winkel W4 und der fünfte Winkel W5 haben jeweils die gleiche Größe wie der zweite Winkel W2 und der dritte Winkel W3. An die sechste Faltkante F6 des sechsten Abschnitts 6 grenzt der siebte Abschnitt 7. Der siebte Abschnitt 7 ist im gezeigten Fall mit einer ersten Lasche 9 versehen. Zweckmäßigerweise stimmt die Anzahl der ersten Laschen 9 mit der der ersten Durchbrüche 8 überein. Die Laschen 9 weisen Rastmittel zum Einrasten in die weiteren Durchbrüche WD auf.

In Fig. 1 sind der sechste W6, siebte W7, achte W8 und neunte Winkel W9 rechte Winkel. An der ersten A3 und zweiten Außenkante A4 des dritten 3 und vierten Abschnitts 4 kann eine erste Zunge Z1 bzw. zweite Zunge Z2 angeordnet sein. An der dritten A5 und vierten Außenkante A6 des fünften 5 und sechsten Abschnitts 6 kann eine dritte Zunge Z3 bzw. vierte Zunge Z4 angeordnet sein.

Fig. 2a zeigt ein erfindungsgemäßes Eckblechformteil in gefaltetem Zustand, welches aus einem ähnlichen Blechzuschnitt wie dem in Fig. 1 gezeigten hergestellt ist. Die erste Innenkante I3 des dritten Abschnitts 3 und die zweite Innenkante I4 des vierten Abschnitts 4 grenzen aneinander. Die dritte Innenkante I5 des fünften Abschnitts 5 und die sechste Faltkante F6 grenzen ebenfalls aneinander. In dieser Ausführungsform sind der erste 1 und der zweite Abschnitt 2 an der zweiten F2 und dritten Faltkante F3 rechtwinklig gegenüber dem dritten 3 und dem vierten Abschnitt 4 abgekantet. Der erste Winkel W1 zwischen dem ersten 1 und dem zweiten Abschnitt 2 ist daher identisch mit der Summe des zweiten W2 und des vierten Winkels W4. Zur Verdeutlichung sind hier der zweite W2 und der vierte Winkel W4 zusammen als erster Winkel W1 dargestellt, obwohl der erste Winkel W1 aus dieser Perspektive eigentlich nicht sichtbar ist. In einem Bereich der dritten Außenkante A5 sind zwei zweite Durchbrüche 11 gebildet. Die Anzahl der zweiten Durchbrüche 11 ist zweckmäßigerweise abhängig von einer Länge der dritten Außenkante A5. Entsprechend sind im Bereich einer vierten Außenkante A6 auf einer vierten Zunge Z4 zwei zweite Laschen 12 gebildet. Das Eckblechformteil weist eine zweite Zunge Z2 auf, welche sich von einer zweiten Außenkante A4 des vierten Abschnitts 4 erstreckt. Hier ist angedeutet, dass die zweite Zunge Z2 und die vierte Zunge Z4 um eine Blechstärke nach innen in die Querschnittsform versetzt sind. Die fünfte Zunge Z5 ist hier als Vorsprung aus dem sechsten Abschnitt 6 herausgebogen.

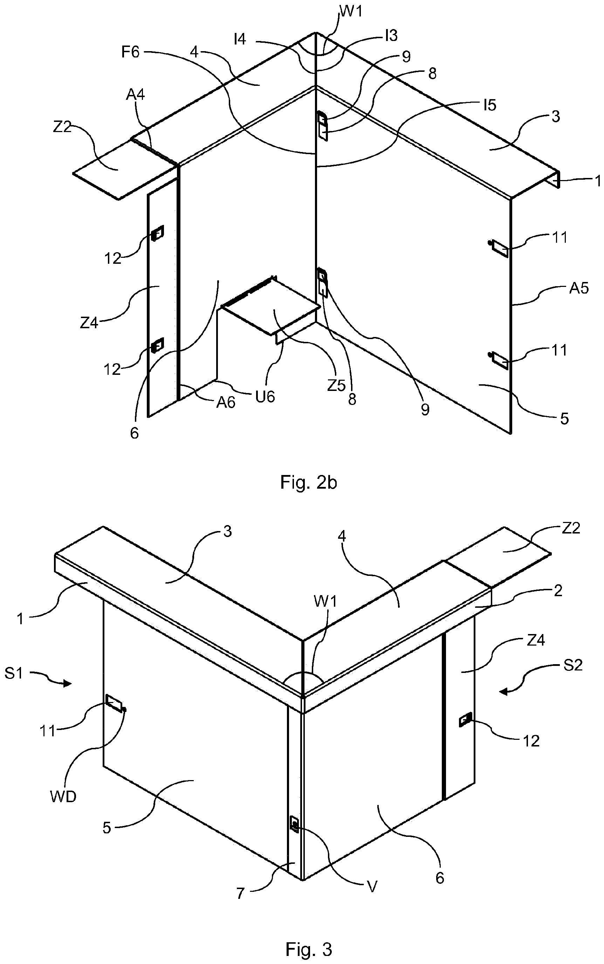

Fig. 2b zeigt eine weitere Ausgestaltung des erfindungsgemäßen Blechformteils, welches sich von dem in Fig. 2b dargestellten Blechformteil nur dadurch unterscheidet, dass die zweite Unterkante U6 nicht durchgehend ist, sondern durch die fünfte Zunge Z5 unterbrochen ist. Die fünfte Zunge Z5 ist in einem rechten Winkel aus dem sechsten Abschnitt 6 herausgebogen. Es ist grundsätzlich bei allen erfindungsgemäßen Eckblechformteilen möglich, dass die erste U5 und/oder die zweite Unterkante U6 jeweils durchgehend verläuft oder durch die herausgebogene oder herausbiegbare mindestens eine fünfte Zunge Z5 unterbrochen ist.

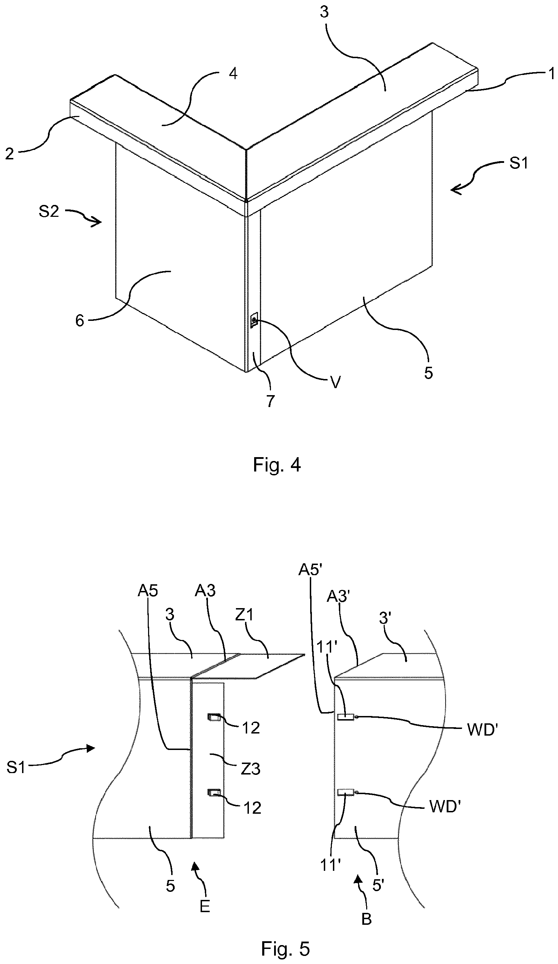

Fig. 3 und 4 zeigen jeweils eine weitere Ansicht eines weiteren Eckblechformteils. Der erste Abschnitt 1 und der zweite Abschnitt 2 zeigen in dieser Darstellung zum Betrachter. Der siebte Abschnitt 7 überlappt mit dem fünften Abschnitt 5. Mit dem Bezugszeichen V sind die den siebten 7 mit dem fünften Abschnitt 5 verbindenden Verbindungsmittel bezeichnet.

Fig. 5 zeigt einen Ausschnitt aus einem ersten Schenkel S1 eines Eckblechformteils E mit einem dritten Abschnitt 3 und einem fünften Abschnitt 5 und eine damit zu verbindende Außenseite eines weiteren Eckblechformteils oder eines weiteren Blechformteils mit einem dem Eckblechformteil entsprechenden Querschnitt. Vom dritten Abschnitt 3 erstreckt sich eine erste Zunge Z1 und vom fünften Abschnitt 5 erstreckt sich eine dritte Zunge Z3. Die erste Z1 und dritte Zunge Z3 können sich von der ganzen oder nur einem Teil der ersten A3 und/oder dritten Außenkante A5 des dritten 3 und fünften Abschnitts 5 erstrecken. Die dritte Zunge Z3 weist zweite Laschen 12 auf. Mit dem Bezugszeichen B ist ein weiteres Blechformteil bezeichnet, welches eine weitere dritte Außenkante A5' eines weiteren fünften Abschnitts 5' und eine weitere erste Außenkante A3' eines weiteren dritten Abschnitts 3' aufweist. Die erste Außenkante A3 und die weitere erste Außenkante A3' haben zweckmäßigerweise die gleiche Länge. Auch die dritte Außenkante A5 und die weitere dritte Außenkante A5' haben zweckmäßigerweise die gleiche Länge. Das Eckblechformteil E und das weitere Blechformteil B haben die gleiche Querschnittsform. Statt des Blechformteils B könnte auch ein weiteres, insbesondere erfindungsgemäßes, Eckblechformteil mit dem Eckblechformteil E verbunden werden (nicht dargestellt). Die erste Zunge Z1 und die dritte Zunge Z3 sind um eine Blechstärke nach innen versetzt, so dass die erste Zunge Z1 unter den weiteren dritten Abschnitt 3' und die dritte Zunge Z3 hinter den weiteren fünften Abschnitt 5' des weiteren Blechformteils B geschoben werden kann. Der weitere fünfte Abschnitt 5' weist weitere zweite Durchbrüche 11' auf. Die zweiten Laschen 12 werden durch die weiteren zweiten Durchbrüche 11' in den weiteren fünften Abschnitt 5' eingesteckt. Neben den weiteren zweiten Durchbrüchen 11' sind im weiteren fünften Abschnitt 5' weitere Durchbrüche WD' zum Einrasten von in den Laschen 12 vorhandenen Rastmitteln vorhanden.

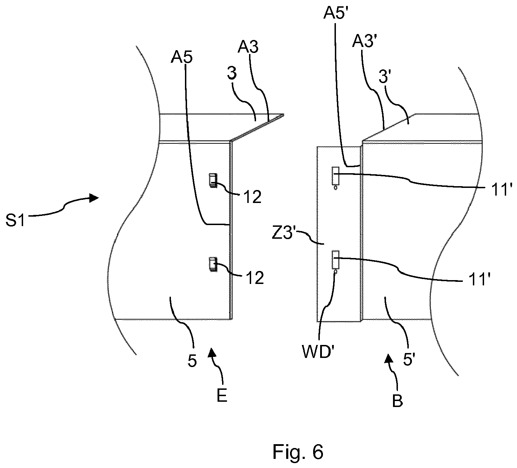

Fig. 6 zeigt eine weitere Ausgestaltung eines Ausschnitts aus einem ersten Schenkel S1 eines Eckblechformteils E. Das Eckblechformteil E zeigt einen fünften Abschnitt 5 mit zweiten Laschen 12 und einem dritten Abschnitt 3. Das weitere Blechformteil B weist am weiteren fünften Abschnitt 5' eine weitere dritte Zunge Z3' mit weiteren zweiten Durchbrüchen 11' und weiteren Durchbrüchen WD' auf. Die zweiten Laschen 12 werden durch die weiteren Durchbrüche 11' hindurch in den weiteren fünften Abschnitt 5' eingesteckt, so dass die in den zweiten Laschen 12 vorhandenen Rastmittel in die weiteren Durchbrüche WD' einrasten. Die erste Außenkante A3 und die weitere erste Außenkante A3' des weiteren Blechformteils B' haben wiederum die gleiche Länge. Das Eckblechformteil E und das weitere Blechformteil B weisen im Bereich des ersten Schenkels S1 eine gleiche Querschnittsform auf.

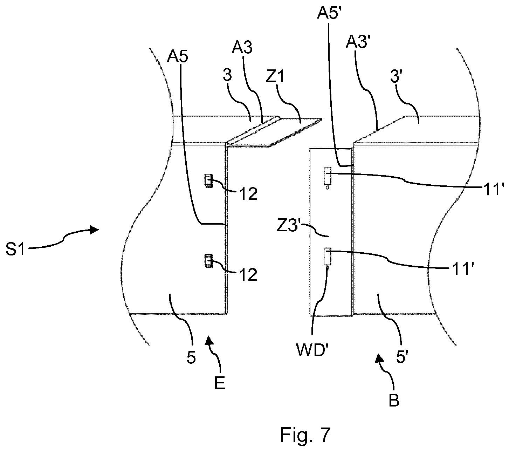

Fig. 7 zeigt eine weitere Ausgestaltung eines Ausschnitts aus einem ersten Schenkel S1 eines Eckblechformteils E und eines weiteren Blechformteils B, wobei hier das Eckblechformteil E eine erste Zunge Z1 und das weitere Blechformteil B eine weitere dritte Zunge Z3' aufweist. Die weitere dritte Zunge Z3' weist neben den weiteren zweiten Durchbrüchen 11' auch weitere Durchbrüche WD' zum Einrasten von an den zweiten Laschen 12 des Eckblechformteils E vorhandenen Rastmitteln auf.

Obwohl in sämtlichen der obigen Ausführungsbeispiele ein weiterer Durchbruch WD und ggf. ein weiterer Durchbruch WD' des weiteren Blechformteils B zum Einrasten von einem in einer Lasche vorhandenen Rastmittel dargestellt ist, sind weder das Rastmittel, noch der weitere Durchbruch WD, noch der weitere Durchbruch WD' des weiteren Blechformteils B unbedingt erforderlich. Ein Verrasten des Rastmittels im weiteren Durchbruch WD oder weiteren Durchbruch WD' des weiteren Blechformteils B erhöht lediglich die Sicherheit einer durch die in einen Durchbruch eingreifenden Lasche bereitgestellten Verbindung.

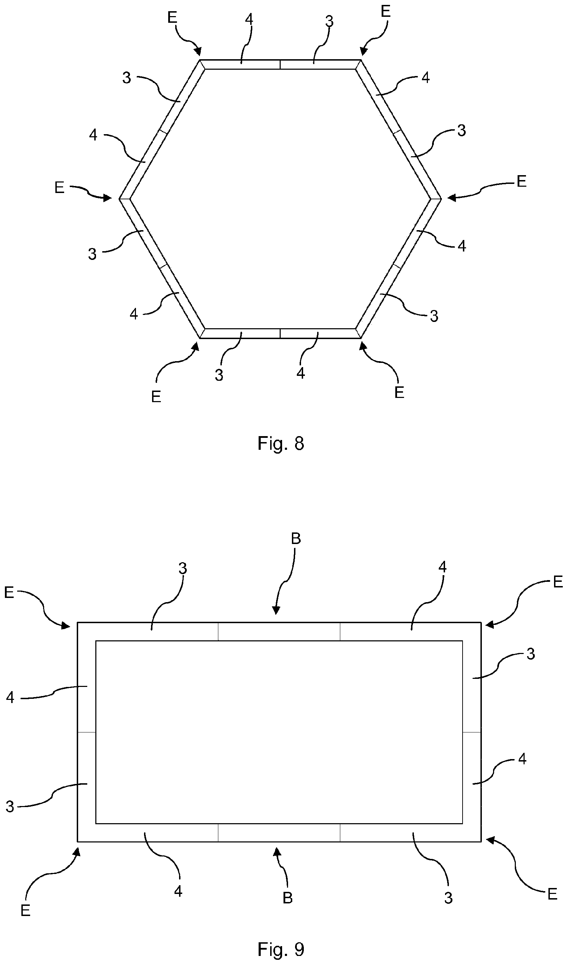

Fig. 8 zeigt ein Rasenkantenset bestehend aus sechs Eckblechformteilen E. Alle Eckblechformteile weisen einen ersten Winkel W1 von 120° auf. Der dritte Abschnitt 3 eines jeden der Eckblechformteile E stößt jeweils an den vierten Abschnitt 4 des jeweils benachbarten Eckblechformteils E. Mit Hilfe des Rasenkantensets kann so einfach eine vorgegebene geometrische Form, z. B. das gezeigte Sechseck, hergestellt werden. Die Eckblechformteile E können bereits miteinander verbunden in das Erdreich eingebracht werden oder erst beim Einbringen in das Erdreich jeweils mit dem benachbarten Eckblechformteil E verbunden werden. Ein solches Rasenkantenset eignet sich auch als Beetumrandung oder z. B. als Sandkasteneinfassung.

Fig. 9 zeigt ein Rasenkantenset bestehend aus vier Eckblechformteilen E mit einem ersten Winkel von 90° und zwei weiteren Blechformteilen B. Mit Hilfe dieses Rasenkantensets kann in einfacher Weise eine rechteckige Begrenzung hergestellt werden.

In einer Abwandlung können die Eckblechformteile auch als Abschluss und Stabilisierung, z. B. für einen Holzzaun, eingesetzt werden, indem jeder der Schenkel des Eckblechformteils auf ein Brett oder einen Pfosten des Holzzauns aufgesetzt wird, so dass die Bretter oder Pfosten des Holzzauns stabilisiert werden.

### Bezugszeichenliste

- 1: erster Abschnitt
- 2: zweiter Abschnitt
- 3: dritter Abschnitt
- 4: vierter Abschnitt
- 5: fünfter Abschnitt
- 6: sechster Abschnitt
- 7: siebter Abschnitt
- 3': weiterer dritter Abschnitt
- 5': weiterer fünfter Abschnitt
- 8: erster Durchbruch
- 9: erste Lasche
- 11: zweiter Durchbruch
- 11': weiterer zweiter Durchbruch
- 12: zweite Lasche

- A3: erste Außenkante
- A3': weitere erste Außenkante
- A4: zweite Außenkante
- A5: dritte Außenkante
- A5': weitere dritte Außenkante
- A6: vierte Außenkante
- B: weiteres Blechformteil
- E: Eckblechformteil
- F1: erste Faltkante
- F2: zweite Faltkante
- F3: dritte Faltkante
- F4: vierte Faltkante
- F5: fünfte Faltkante
- F6: sechste Faltkante
- F7: siebte Faltkante
- I3: erste Innenkante
- I4: zweite Innenkante
- I5: dritte Innenkante
- S1: erster Schenkel
- S2: zweiter Schenkel
- U5: erste Unterkante
- U6: zweite Unterkante
- V: Verbindungsmittel
- W1: erster Winkel
- W2: zweiter Winkel
- W3: dritter Winkel
- W4: vierter Winkel
- W5: fünfter Winkel
- W6: sechster Winkel
- W7: siebter Winkel
- W8: achter Winkel
- W9: neunter Winkel
- WD: weiterer Durchbruch
- WD': weiterer Durchbruch des weiteren Blechformteils
- Z1: erste Zunge
- Z2: zweite Zunge
- Z3: dritte Zunge
- Z3': weitere dritte Zunge
- Z4: vierte Zunge
- Z5: fünfte Zunge

## Patentansprüche

1. Eckblechformteil mit einem ersten (S1) und einem zweiten Schenkel (S2), wobei das Eckblechformteil einstückig aus einem Blechzuschnitt hergestellt ist, wobei die beiden Schenkel (S1, S2) über einen einen ersten (1) und einen zweiten Abschnitt (2) umfassenden oder einen aus einem ersten (1) und einem zweiten Abschnitt (2) bestehenden Randbereich des Blechzuschnitts miteinander in Verbindung stehen, wobei der erste Schenkel (S1) den ersten Abschnitt (1) und der zweite Schenkel (S2) den zweiten Abschnitt (2) umfasst und zwischen dem ersten (1) und dem zweiten Abschnitt (2) eine erste Faltkante (F1) angeordnet ist, an welcher der erste Abschnitt (1) abgekantet ist, wobei der erste Abschnitt (1) gegenüber dem zweiten Abschnitt (2) einen ersten Winkel (W1) zwischen 20° und 170° bildet, wobei beide Schenkel (S1, S2) jeweils neben dem Randbereich nebeneinander angeordnete weitere Abschnitte (3, 4, 5, 6, 7) aufweisen, wobei zwischen dem Randbereich und den weiteren Abschnitten (3, 4, 5, 6, 7) und zwischen den weiteren Abschnitten (3, 4, 5, 6, 7) eines jeden der Schenkel (S1, S2) jeweils weitere Faltkanten (F2, F3, F4, F5, F6) angeordnet sind, an denen die weiteren Abschnitte (3, 4, 5, 6, 7) jeweils gegenüber dem benachbarten Randbereich oder benachbarten weiteren Abschnitt (3, 4, 5, 6, 7) abgekantet sind,
wobei an beiden Schenkeln (S1, S2) jeweils in einem der nicht direkt benachbart zum Randbereich angeordneten weiteren Abschnitte mindestens ein Verbindungsmittel (V) vorgesehen ist, welches entsprechend dem Verbindungsmittel (V) am jeweils anderen der Schenkel (S1, S2) so angeordnet und ausgebildet ist, dass die beiden Verbindungsmittel (V) so miteinander verbunden sein können, dass jeder der Schenkel (S1, S2) dadurch gegenüber dem jeweils anderen der Schenkel in einem durch den ersten Winkel (W1) festgelegten weiteren Winkel fixiert ist
oder
wobei zumindest an einem der Schenkel (S1, S2) in einem der weiteren Abschnitte (3, 4, 5, 6, 7), welcher nicht direkt benachbart zum Randbereich angeordnet ist, mindestens ein Verbindungsmittel (V) vorgesehen ist, welches so ausgebildet ist, dass es mit dem jeweils anderen der Schenkel (S1, S2) so verbunden sein kann, dass jeder der Schenkel (S1, S2) dadurch gegenüber dem jeweils anderen der Schenkel in einem durch den ersten Winkel (W1) festgelegten weiteren Winkel fixiert ist.

2. Eckblechformteil nach Anspruch 1,
wobei die weiteren Abschnitte einen dritten (3), vierten (4), fünften (5), sechsten (6) und siebten Abschnitt (7) umfassen,
wobei der erste Schenkel (S1) nebeneinander angeordnet den ersten (1), dritten (3) und fünften Abschnitt (5) umfasst und der zweite Schenkel (S2) nebeneinander angeordnet den zweiten (2), vierten (4), sechsten (6) und siebten Abschnitt (7) umfasst,
wobei die weiteren Faltkanten eine zweite (F2), dritte (F3), vierte (F4), fünfte (F5) und sechste Faltkante (F6) umfassen,
wobei sich vom ersten Abschnitt (1) der dritte Abschnitt (3) erstreckt, wobei die zweite Faltkante (F2) senkrecht zur ersten Faltkante (F1) verläuft und zwischen dem ersten (1) und dem dritten Abschnitt (3) angeordnet ist, wobei der dritte Abschnitt (3) eine trapezförmige Fläche mit einem spitzen zweiten Winkel (W2) und einem gegenüberliegenden stumpfen dritten Winkel (W3) an einer ersten Innenkante (I3) des dritten Abschnitts (3) bildet, wobei die sich zwischen dem spitzen zweiten Winkel (W2) und dem stumpfen dritten Winkel (W3) erstreckende erste Innenkante (I3) am spitzen zweiten Winkel (W2) an ein Ende der ersten Faltkante (F1) grenzt,
wobei sich vom zweiten Abschnitt (2) der vierte Abschnitt (4) erstreckt, wobei die dritte Faltkante (F3) senkrecht zur ersten Faltkante (F1) verläuft und zwischen dem zweiten (2) und dem vierten Abschnitt (4) angeordnet ist, wobei der vierte Abschnitt (4) eine trapezförmige Fläche mit einem spitzen vierten Winkel (W4) und einem gegenüberliegenden stumpfen fünften Winkel (W5) an einer zweiten Innenkante (I4) des vierten Abschnitts (4) bildet, wobei die sich zwischen dem spitzen vierten Winkel (W4) und dem stumpfen fünften Winkel (W5) erstreckende zweite Innenkante (I4) am spitzen vierten Winkel (W4) an das Ende der ersten Faltkante (F1) grenzt,
wobei die erste Innenkante (I3) und die zweite Innenkante (I4) im gefalteten Zustand des Blechzuschnitts parallel verlaufen und aneinandergrenzen,
wobei sich vom dritten Abschnitt (3) der fünfte Abschnitt (5) erstreckt, wobei die vierte Faltkante (F4) zwischen dem dritten Abschnitt (3) und dem fünften Abschnitt (5) angeordnet ist, wobei die zweite (F2) und die vierte Faltkante (F4) parallel verlaufen, wobei eine Fläche des fünften Abschnitts (5) einen sechsten (W6) und einen siebten Winkel (W7) aufweist, zwischen denen sich eine dritte Innenkante (I5) erstreckt,
wobei sich vom vierten Abschnitt (4) der sechste Abschnitt (6) erstreckt, wobei die fünfte Faltkante (F5) zwischen dem vierten Abschnitt (4) und dem sechsten Abschnitt (6) angeordnet ist, wobei die dritte (F3) und die fünfte Faltkante (F5) parallel verlaufen, wobei eine Fläche des sechsten Abschnitts (6) einen achten (W8) und einen neunten Winkel (W9) aufweist, zwischen denen sich die sechste Faltkante (F6) erstreckt,
wobei sich an oder entlang der sechsten Faltkante (F6) der siebte Abschnitt (7) erstreckt, wobei die sechste Faltkante (F6) zwischen dem sechsten Abschnitt (6) und dem siebten Abschnitt (7) angeordnet ist, und der siebte Abschnitt (7) und der fünfte Abschnitt (5) im gefalteten Zustand des Blechzuschnitts zumindest teilweise überlappen,
wobei die dritte Innenkante (I5) und die sechste Faltkante (F6) im gefalteten Zustand des Blechzuschnitts parallel verlaufen und optional aneinandergrenzen,
wobei die Verbindungsmittel (V) im fünften (5) und siebten Abschnitt (7) angeordnet sind.

3. Eckblechformteil nach einem der vorhergehenden Ansprüche, wobei der fünfte Abschnitt (5) im Bereich der dritten Innenkante (I5) als Verbindungsmittel (V) zumindest einen ersten Durchbruch (8) zum Einstecken einer ersten Lasche (9) in den fünften Abschnitt (5) durch den ersten Durchbruch (8) hindurch aufweist, und der siebte Abschnitt (7) die aus dem siebten Abschnitt (7), insbesondere durch Schneiden oder Stanzen, gebildete und zu dem ersten Durchbruch (8) korrespondierende erste Lasche (9) aufweist.

4. Eckblechformteil nach einem der vorhergehenden Ansprüche, wobei die erste Lasche (9) so ausgebildet ist, dass der fünfte Abschnitt (5) von dem siebten Abschnitt (7) durch eine von der ersten Lasche (9) ausgeübte Federkraft oder durch ein Umbiegen der ersten Lasche (9) gehalten oder fixiert werden kann.

5. Eckblechformteil nach einem der vorhergehenden Ansprüche, wobei der dritte Abschnitt (3) eine der ersten Innenkante (I3) gegenüberliegende erste Außenkante (A3), der vierte Abschnitt (4) eine der zweiten Innenkante (I4) gegenüberliegende zweite Außenkante (A4), der fünfte Abschnitt (5) eine der dritten Innenkante (I5) gegenüberliegende dritte Außenkante (A5) und der sechste Abschnitt (6) eine der sechsten Faltkante (F6) gegenüberliegende vierte Außenkante (A6) aufweist, wobei jeweils im Bereich von zumindest einer oder zwei der ersten (A3), zweiten (A4), dritten (A5) und vierten Außenkante (A6) zumindest ein Befestigungsmittel zum Befestigen weiterer Blechformteile ausgebildet oder angeordnet ist,
wobei das Befestigungsmittel optional mindestens ein Befestigungsmittel oder eine Kombination von Befestigungsmitteln aus der folgenden Gruppe ist:
i) eine im Bereich der ersten (A3), zweiten (A4), dritten (A5) und/oder vierten Außenkante (A6) angeordnete erste (Z1), zweite (Z2), dritte (Z3) und/oder vierten Zunge (Z4) zum Überlappen mit einem Bereich einer ersten (A3), zweiten (A4), dritten (A5) und/oder vierten Außenkante (A6) eines weiteren Eckblechformteils gemäß diesem oder einem der vorhergehenden Ansprüche oder zum Überlappen mit einem weiteren Blechformteil,
ii) mindestens ein zweiter Durchbruch (11), welcher in der dritten (Z3) und/oder vierten Zunge (Z4) oder im fünften (5) und/oder sechsten Abschnitt (6) im Bereich der dritten (A5) und/oder vierten Außenkante (A6) angeordnet ist, zum Einstecken einer zweiten Lasche (12) eines weiteren Eckblechformteils gemäß Merkmal iii) dieses Anspruchs oder einer Lasche eines weiteren Blechformteils und,
iii) mindestens eine zweiten Lasche (12), welche auf der dritten (Z3) und/oder vierten Zunge (Z4) oder im fünften (5) und/oder sechsten Abschnitt (6) im Bereich der dritten (A5) und/oder vierten Außenkante (A6) angeordnet ist, zum Einstecken in den zweiten Durchbruch (11) eines weiteren Eckblechformteils gemäß Merkmal ii) dieses Anspruchs oder in einen Durchbruch eines weiteren Blechformteils.

6. Eckblechformteil nach einem der vorhergehenden Ansprüche, wobei der zweite (W2) und der vierte Winkel (W4) jeweils größer als 35° und kleiner als 55° ist und der dritte Winkel (W3) 180° abzüglich dem zweiten Winkel (W2) und der fünfte Winkel (W5) 180° abzüglich dem vierten Winkel (W4) beträgt.

7. Eckblechformteil nach einem der vorhergehenden Ansprüche, wobei der sechste (W6), siebte (W7), achte (W8) und neunte Winkel (W9) jeweils rechte Winkel sind.

8. Eckblechformteil nach einem der vorhergehenden Ansprüche, wobei der erste (1) und der zweite Abschnitt (2), der dritte (3) und der vierte Abschnitt (4) sowie der fünfte (5) und der sechste Abschnitt (6) jeweils eine zueinander spiegelsymmetrische Umfangsform aufweisen.

9. Eckblechformteil nach einem der Ansprüche 2 bis 8, wobei im fünften Abschnitt (5) der vierten Faltkante (F4) gegenüberliegend eine erste Unterkante (U5) und im sechsten Abschnitt (6) der fünften Faltkante (F5) gegenüberliegend eine zweite Unterkante (U6) angeordnet sind, wobei der fünfte (5) und/oder der sechste Abschnitt (6) zumindest eine fünfte Zunge (Z5) aufweist, wobei die fünfte Zunge (Z5) an einer siebten Faltkante (F7) aus dem fünften (5) und/oder sechsten Abschnitt (6) herausgebogen werden kann und im herausgebogenen Zustand gegenüber dem fünften (5) und/oder sechsten Abschnitt (6) einen, insbesondere rechtwinkligen, Vorsprung bildet, wobei die siebte Faltkante zur vierten oder fünften Faltkante (F4, F5) in einem definierten Abstand parallel und beabstandet zur ersten Unterkante (U5) und/oder zweiten Unterkante (U6) verläuft.

10. Verwendung des Eckblechformteils nach einem der vorhergehenden Ansprüche als Rasenkante oder Beetbegrenzung, indem das Eckblechformteil mit dem fünften (5) und sechsten Abschnitt (6) in ein Erdreich gesteckt wird, und mit weiteren Blechformteilen und/oder weiteren Eckblechformteilen nach einem der vorhergehenden Ansprüche verbunden wird, wobei der erste (S1) und der zweite Schenkel (S2) und die damit zu verbindenden weiteren Blechformteile und/oder erste (S1) und/oder zweite Schenkel (S2) der weiteren Eckblechformteile eine gleiche Querschnittsform aufweisen.

11. Verfahren zum Herstellen eines Eckblechformteils nach einem der Ansprüche 1 bis 9 mit den folgenden Schritten:
a) Bereitstellen eines Bleches,
b) Ausschneiden oder Ausstanzen eines vorgegebenen Blechzuschnitts entlang eines Umfangsrands, wobei der Blechzuschnitt einen ersten (1), zweiten (2), dritten (3), vierten (4), fünften (5), sechsten (6) und siebten Abschnitt (7) umfasst,
wobei der Umfangsrand durch Umfangsrandabschnitte gebildet wird,
wobei der erste (1) und der zweite Abschnitt (2) jeweils zwei aneinandergrenzende Umfangsrandabschnitte aufweisen,
wobei der dritte Abschnitt (3) eine erste Innenkante (I3) und eine gegenüberliegende erste Außenkante (A3) als Umfangsrandabschnitte aufweist,
wobei der vierte Abschnitt (4) eine zweite Innenkante (I4) und eine gegenüberliegende zweite Außenkante (A4) als Umfangsrandabschnitte aufweist,
wobei der fünfte Abschnitt (5) eine dritte Innenkante (I5), eine gegenüberliegende dritte Außenkante (A5) und eine die dritte Innenkante (I5) und die dritte Außenkante (A5) verbindende erste Unterkante (U5) als Umfangsrandabschnitte aufweist,
wobei der siebte Abschnitt (7) mindestens drei Umfangsrandabschnitte aufweist, wobei der sechste Abschnitt (6) eine vierte Außenkante (A6) und eine daran angrenzende zweite Unterkante (U6) als Umfangsrandabschnitte aufweist,
wobei der von der ersten (A3), zweiten (A4), dritten (A5) und vierten Außenkante (A6) gebildete Umfangsrandabschnitt jeweils optional eine jeweils drei Umfangsrandabschnitte aufweisende erste (Z1), zweite (Z2), dritte (Z3) und vierte Zunge (Z4) umfasst,
wobei der dritte Abschnitt (3) an den ersten (1) und den fünften Abschnitt (5), der vierte Abschnitt (4) an den zweiten (2) und den sechsten Abschnitt (6), und der siebte Abschnitt (7) an den sechsten Abschnitt (6) grenzt,
c) Herstellen oder Bereitstellen jeweils mindestens eines Verbindungsmittels (V) im fünften (5) und/oder siebten Abschnitt (7),
d) Falten des Blechzuschnitts an der ersten (F1), zweiten (F2), dritten (F3), vierten (F4), fünften (F5) und sechsten Faltkante (F6) durch Abkanten um einen vorgegebenen Kantenwinkel, so dass die erste Innenkante (I3) an die zweite Innenkante (I4) stößt und der siebte Abschnitt (7) und der fünfte Abschnitt (5) zumindest teilweise überlappen,
e) Verbinden des siebten Abschnitts (7) mit dem fünften Abschnitt (5) mittels des/der Verbindungsmittel(s) (V).

12. Verfahren nach Anspruch 11, wobei das Verbindungsmittel (V) durch zumindest einen ersten Durchbruch (8) im fünften Abschnitt (5) und eine erste Lasche (9) im siebten Abschnitt (7) gebildet wird,
und wobei im Schritt e) die erste Lasche (9) durch den ersten Durchbruch (8) hindurch in den fünften Abschnitt (5) eingesteckt wird.

13. Verfahren nach Anspruch 11 oder 12, umfassend mindestens einen der weiteren Schritte
- Herstellen einer ersten (Z1), zweiten (Z2), dritten (Z3) und/oder vierten Zunge (Z4) im Bereich der ersten (A3), zweiten (A4), dritten (A5) und/oder vierten Außenkante (A6) und optional
- Herstellen eines Doppelfalzes an der ersten (Z1), zweiten (Z2), dritten (Z3) und/oder vierten Zunge (Z4) an deren jeweiligem Übergang von der ersten (A3), zweiten (A4), dritten (A5) und/oder vierten Außenkante (A6), so dass die erste (Z1), zweite (Z2), dritte (Z3) und/oder vierte Zunge (Z4) sich jeweils um eine Blechstärke versetzt parallel zum dritten (3), vierten (4), fünften (5) und/oder sechsten Abschnitt (6) erstreckt,
- Herstellen zumindest eines zweiten Durchbruchs (11) in zumindest dem fünften Abschnitt (5), dem sechsten Abschnitt (6), der dritten Zunge (Z3) und/oder der vierten Zunge (Z4) zum Einstecken einer zweiten Lasche (12) eines weiteren Eckblechformteils gemäß einem der Ansprüche 1 bis 9 oder eines weiteren Blechformteils und
- Herstellen zumindest einer zweiten Lasche (12) in zumindest dem fünften Abschnitt (5), dem sechsten Abschnitt (6), der dritten Zunge (Z3) und/oder der vierten Zunge (Z4) zum Einstecken in einen zweiten Durchbruch (11) in einem weiteren Eckblechformteil gemäß einem der Ansprüche 1 bis 9 oder einem weiteren Blechformteil.

14. Verfahren nach einem der Ansprüche 11 bis 13, weiterhin umfassend die weiteren Schritte
- Herstellen von zumindest einer fünften Zunge (Z5) im fünften (5) und/oder sechsten Abschnitt (6), so dass die fünfte Zunge (Z5) über eine zur vierten (F4) oder fünften Faltkante (F5) parallele siebte Faltkante (F7) mit dem fünften (5) oder sechsten Abschnitt (6) verbunden ist, und
- Herausbiegen der dritten Zunge (Z5) aus dem fünften (5) und/oder sechsten Abschnitt (6), so dass die dritte Zunge (Z5) gegenüber dem fünften (5) oder sechsten Abschnitt (6) einen, insbesondere rechtwinkligen, Vorsprung bildet.

15. Rasenkantenset, umfassend zumindest zwei Eckblechformteile nach einem der Ansprüche 1 bis 9 und optional weitere Blechformteile,
wobei die Schenkel (S1, S2) der Eckblechformteile und die weiteren Blechformteile eine gleiche Querschnittsform aufweisen.
